# FASCICULE DE BREVET EUROPEEN

(11) **EP 0 826 019 B1**
(45) Date de publication et mention de la délivrance du brevet: **11.08.1999**
(21) Numéro de dépôt: 96916188.4
(22) Date de dépôt: 10.05.1996
(51) Int. Cl.: C09D 5/02, C09D 5/08, C09D 133/06, C09D 125/14

(54) **COMPOSITIONS DE REVETEMENT ANTICORROSION EN PHASE AQUEUSE ET LEUR UTILISATION A LA PROTECTION D'ELEMENTS METALLIQUES**
BESCHICHTUNGSMITTELZUSAMMENSETZUNGEN ANTIKOROSIVE, ALS WÄSSRIGE PHASEOORLIEGENDE UND IHRE VERWENDUNG ZUR SCHUTZ METALLISCHE GEGENSTÄNDE
ANTICORROSIVE AQUEOUS PHASE COATING COMPOSITIONS AND USE THEREOF FOR PROTECTING METAL ELEMENTS

(30) Priorité: 17.05.1995 FR 9506076
(43) Date de publication de la demande: 04.03.1998
(73) Titulaire: LAFARGE MATERIAUX DE SPECIALITES S.A., 92446 Issy les Moulineaux Cedex (FR)
(72) Inventeur: STOCK, Claude, F-38460 Soleymieu (FR); MANSOUX, Sandrine, F-69100 Villeurbanne (FR); BLOT, Estelle, F-69003 Lyon (FR)
(74) Mandataire: Tilloy, Anne-Marie
(86) Numéro de dépôt international: FR9600709
(87) Numéro de publication internationale: WO9636670

(56) Documents cités:
- EP-A- 0 412 933
- EP-A- 0 634 460
- EP-A- 0 634 461
- CS-A- 269 122
- CS-A- 277 042
- FR-A- 1 157 476
- GB-A- 2 279 344
- US-A- 4 243 417

## Description

La présente invention a trait à des compositions de revêtement anticorrosion en phase aqueuse. Elle concerne spécialement de telles compositions, exemptes de pigment toxique contenant du tungstène, du chrome à l'état d'oxydation VI, du plomb, du molybdène ou du bore.

Les compositions selon l'invention sont utiles au revêtement d'éléments métalliques comprenant du fer, et plus particulièrement des pièces métalliques ferreuses dans l'industrie automobile pour en assurer la protection contre la corrosion.

### ART ANTERIEUR

La plupart des peintures anticorrosion disponibles sur le marché actuel comprennent un liant alkyde ou époxyde bicomposant, un ou des solvants organiques et un ou des pigments anticorrosion tels le chromate de zinc ou de strontium, des métaborates ou des phosphates.

Ces peintures ne permettent pas de respecter totalement ou facilement les contraintes environnementales essentiellement en raison de la présence de solvant organique.

Par ailleurs, de nombreux travaux concernant l'utilisation de compositions aqueuses de revêtements comme couche primaire anticorrosion sur de l'acier, ont été accomplis. Ces revêtements sont formés par séchage et éventuellement polymérisation de la composition appliquée. Les résultats commentés par Don Emch dans "Journal of Water Borne Coatings", Février 1981, p. 2-16 laissent peu espérer l'obtention de performances satisfaisantes au départ de dispersion aqueuse de polymère de type styrène-acrylique ou acrylique modifié.

Les difficultés rencontrées dans la formulation de compositions anticorrosion de haute performance à partir de dispersion aqueuse de polymère sont encore soulignées par Z.W. Wicks, Jr dans "Corrosion Protection by Coating" 1987 (publié par la Federation of Societies for Coatings Technology).

De telles compositions de revêtement renferment usuellement une dispersion aqueuse d'un liant polymérique filmogène, un ou plusieurs pigments inhibiteurs de corrosion et, le cas échéant un ou plusieurs additifs, par exemple un épaississant. Parmi celles-ci, de nombreuses compositions présentent généralement au moins l'un des inconvénients ci-après :
- elles sont peu stables au stockage ;
- elles induisent une corrosion immédiate ou "éclair" ("flash-rusting") lorsqu'on les laisse sécher à température ambiante ;
- les duretés de film sont inférieures aux duretés obtenues avec les peintures anticorrosion renfermant un liant alkyde ou époxyde bicomposant et un ou plusieurs solvants organiques ;
- les performances de tenue au brouillard salin sont insuffisantes dans la plupart des cas ;
- l'adhérence au support métallique est inférieure à celle obtenue avec les peintures anticorrosion précitées à base d'un liant alkyde ou époxyde bicomposant.

Ainsi, par le brevet européen EP-B-035316, on connaît des peintures anticorrosion aqueuses comprenant :
- une dispersion aqueuse d'un polymère filmogène essentiellement formé de motifs dérivés d'un ou plusieurs monomères à mono-insaturation éthylénique contenant un seul groupe vinyle ou vinylidène ;
- un pigment inhibiteur de corrosion (toute composition apportant une quantité déposant un revêtement d'ions métalliques dissous lorsqu'elle est appliquée au substrat ferreux ou contenant un acide organique qui peut former un complexe avec le substrat ferreux étant exclue).

La caractéristique principale de ces peintures réside dans leur pH qui est compris dans l'intervalle de 4,0 à 6,5.

De telles peintures, qui peuvent être appliquées et séchées à température ambiante, ont pour objectif d'éliminer les risques de formation instantanée des tâches de rouille.

L'instabilité (au stockage notamment) n'a pas été décrite comme posant un problème dans de telles peintures anticorrosion aqueuses.

Or, en pratique, il a été observé que certaines dispersions aqueuses d'un polymère filmogène, tel que les polymères acryliques, sont généralement instables à pH acide et floculent à ces pH.

D'autres documents décrivent également des peintures anticorrosion aqueuses à base de dispersions de (co)polymère acrylique modifié ou non.

C'est ainsi que :
- le brevet français FR 2616439 décrit des peintures hydrodiluables renfermant, à titre de liant, un copolymère acrylique émulsionné dans l'eau, au moins un pigment de coloration en dispersion dans ce liant, un pigment inhibiteur de corrosion, tel que le phosphate de zinc, dispersé et broyé dans le liant, et divers produits auxiliaires tels que agents dispersants, retardateurs de prise, agents de coalescence, agents épaississants, agents mouillants, agents anti-mousse, charges inertes.
   Mais, le solvant organique, que renferment ces peintures hydrodiluables, à raison de 5 à 10 % de leur composition finale, exerce une influence défavorable sur la pollution de l'environnement.
- le brevet européen EP-B-208194 décrit des peintures anticorrosion à base de dispersions aqueuses de copolymère de styrène et de (méth)acrylate d'alkyle.
   Afin que la dispersion de polymère soit stable vis à vis d'ions de métaux, en particulier de ceux des pigments inhibiteurs de la corrosion, ce brevet préconise l'addition d'un système de deux agents émulsifiants particuliers quant à leur nature chimique, dans des proportions variant de 0,6 à 7,5 % en poids d'agents émulsifs rapportés au poids du copolymère.
   Si la stabilité de ces peintures anticorrosion est satisfaisante, en revanche leur performances en terme de corrosion restent moyennes. Quand elles sont appliquées sur des tôles embouties en fer blanc dégraissées, de manière à obtenir une couche sèche épaisse (de 50 à 80 microns) après un séchage de 3 jours à la température ambiante, les résultats de l'essai de pulvérisation de sel selon la norme DIN 50 021 conduisent à un démarrage assez rapide de l'enrouillement : respectivement à partir de 120 heures ou 240 heures selon l'épaisseur.
- la demande européenne EP-A-551568 décrit des peintures anticorrosion en phase aqueuse contenant une dispersion aqueuse d'un polyacrylate anionique tel qu'un copolymère de styrène et d'acide (méth)acrylique, un pigment inhibiteur de corrosion renfermant un phosphate ou un phosphosilicate et des additifs choisis parmi les solvants, les pigments, les inhibiteurs de corrosion, les dispersants, les tensioactifs ou des mélanges des additifs précités, les additifs représentant environ de 20 à 65 % du poids total de ces peintures en phase aqueuse.
   En fait, un nombre important des peintures couvertes par la demande EP-A-551568 conduisent à des résultats insatisfaisants en terme de corrosion.

Il a maintenant été découvert de façon inattendue que par l'emploi d'une combinaison d'une classe de liants acryliques particuliers, d'une classe de pigments anticorrosion non toxiques particuliers et d'additifs judicieusement sélectionnés, il est possible de préparer des compositions de revêtement anticorrosion en phase aqueuse présentant l'ensemble des avantages (a)-(f) ci-après :
(a)- stabilité au stockage ;
(b)- formation de revêtements sur des supports ferreux sans phénomène de corrosion immédiate quand elles sont séchées à température ambiante ;
(c)- formation de revêtements sur des supports ferreux présentant des duretés pouvant s'approcher de celles obtenues avec les peintures anticorrosion renfermant un liant alkyde ou époxyde bicomposant et un ou plusieurs solvants organiques (dans les conditions de la norme NF T 30-016 de Décembre 1991). Dans le cadre de l'invention, les duretés des revêtements anti-corrosion sont avantageusement adaptables en fonction de l'application visée ;
(d)- formation de revêtements sur des supports ferreux présentant une tenue au brouillard salin satisfaisante s'approchant de celle obtenue avec les peintures anticorrosion renfermant un liant alkyde ou époxyde bicomposant et un ou plusieurs solvants organiques, voire, dans certains cas, équivalente ou supérieure (dans les conditions de la norme ISO 9227). Plus précisément, les tenues au brouillard salin atteintes dans le cadre de la présente invention sont généralement, dans les conditions de la norme précitée :
   . pour une épaisseur de film sec de l'ordre de 50 microns. au minimum de 250 h (± 50 h) sur tôles dégraissées (non phosphatées), et au minimum de 500 h (± 100 h) sur tôles phosphatées ;
   . pour une épaisseur de film sec de l'ordre de 30 microns, au minimum de 120 h (± 25 h) sur tôles dégraissées (non phosphatées), et au minimum de 250 h (± 50 h) sur tôles phosphatées.
(e)- formation de revêtements sur des supports ferreux présentant une adhérence du support métallique au moins égale à celles obtenues avec les peintures anticorrosion renfermant un liant alkyde ou époxyde bicomposant et un ou plusieurs solvants organiques (dans les conditions de la norme NF T30-038 de Novembre 1975);
(f)- formation de revêtements sur des supports ferreux présentant une bonne résistance et tenue quand ils sont immergés dans l'eau déminéralisée [dans les conditions de la méthode d'essai D27 1327 de Septembre 1988 des automobiles PEUGEOT et CITROEN intitulée revêtements de peintures - résistance à l'immersion dans l'eau (Bac Ford)].

La présente invention a donc pour objet des compositions de revêtement anticorrosion, en phase aqueuse, présentant un pH basique, et caractérisées en ce qu'elles comprennent essentiellement :
a) au moins un liant filmogène sous forme d'une dispersion aqueuse d'un polymère acrylique, de préférence un copolymère styrène-acrylique éventuellement modifié, conduisant, après séchage et/ou polymérisation, à la formation d'un film hydrophobe;
b) au moins un pigment anticorrosion, peu ou pas soluble dans l'eau, ne contenant pas d'élément toxique dans le groupe comprenant le tungstène, le chrome (à l'état d'oxydation VI), le plomb, le molybdène et le bore, et formant des composés avec les ions fer II et III qui sont très peu solubles ou insolubles dans l'eau ;
c) au moins un agent inhibiteur de corrosion, soluble dans l'eau, ne renfermant pas de nitrites et formant, avec les ions fer II ou fer III, des composés qui sont très peu solubles ou insolubles dans l'eau, pour éviter le phénomène de corrosion immédiate ;
d) au moins un agent dispersant quand cette fonction n'est pas apportée par un autre constituant des compositions ;
e) au moins un agent antimousse ;
f) au moins un agent de coalescence ;
g) et, éventuellement, un ou des additifs tels que des charges minérales, des agents épaississants, des agents de neutralisation, des pigments pour la coloration du film, ou des mélanges des additifs précités.

En outre, selon une caractéristique essentielle de la présente invention, le liant filmogène hydrophobe, donc capable d'influencer favorablement la perméabilité à l'eau du film sec du revêtement anticorrosion doit remplir les conditions du test (A) suivant de tenue au brouillard salin d'un vernis :
(1) un vernis est préparé en mélangeant (en % pondéraux) :
   - 94 % de liant filmogène sous forme d'une dispersion aqueuse d'un polymère acrylique ;
   - 5 % d'un agent de coalescence ;
   - 0,3 % d'un agent inhibiteur de corrosion, qui est le composé organométallique commercialisé sous la dénomination Sérad FA 579 par la société HÜLS ;
   - 0,4 % d'un agent mouillant, en l'occurrence le produit fabriqué sous la dénomination DEUTEROL 201E par DEUTERON ;
   - 0,3 % d'un agent épaississant, en l'occurrence un polymère acrylique hydrosoluble commercialisé sous la dénomination Rhéo 2100 par la société COATEX;
   - de l'ammoniaque : la quantité nécessaire pour ajuster le pH à environ 8,6.
(2) Un échantillon de ce vernis est appliqué sur des plaques métalliques ferreuses, phosphatées ou dégraissées au solvant et séchées à l'acétone, en couche humide de 120 microns d'épaisseur, à la barre d'application pour former un film qui est séché selon la destination industrielle finale :
   - au four pendant 10 minutes à 60° C puis 20 minutes à 150° C, ou
   - à température ambiante pendant une semaine.
(3) Les plaques métalliques ferreuses ainsi traitées sont ensuite soumises au test de tenue au brouillard salin dans les conditions de la norme ISO 9227.

Dans le cadre de ses recherches, la demanderesse a mis en évidence que l'ensemble des avantages (a)-(f) précités, plus particulièrement les avantages (d)-(f) vis à vis de la corrosion, sont atteints dans la majorité des cas avec les liants filmogènes sous forme d'une dispersion aqueuse d'un polymère acrylique, avec lesquels on peut former un vernis présentant une tenue au brouillard salin au moins égale à 120 h (± 20 h).

La présente invention a également pour objet l'utilisation des compositions à la protection d'éléments métalliques comprenant du fer dans divers domaines d'activités comme l'industrie automobile et le bâtiment.

L'un des constituants essentiels des compositions selon la présente invention est un liant filmogène sous forme d'une dispersion aqueuse d'un polymère acrylique, de préférence un copolymère styrène-acrylique éventuellement modifié, par exemple, par des groupements réticulables tels que les groupements hydroxyles, les groupements phénols (ou les groupements carboxyles), ce liant filmogène conduisant à la formation d'un film hydrophobe après séchage et/ou polymérisation et remplissant les conditions du test (A) précité.

Par hydrophobe, la demanderesse entend, dans le cadre de la présente invention, que le liant filmogène conduit à la formation d'un film sec peu sensible à l'eau, c'est-à-dire que les films secs obtenus après application et séchage et/ou polymérisation des compositions de revêtement anticorrosion selon l'invention, lorsqu'ils sont soumis à un test de résistance à l'eau dans les conditions de la norme NF T 30-054, ne présentent pas de signes de détérioration importante comme un cloquage ou un net blanchiment révélateur d'une reprise d'eau.

La quantité de dispersion aqueuse d'un polymère acrylique utilisée peut varier dans de larges limites dans la mesure où elle apporte une teneur d'au moins 15 % en poids de liants calculés sur la matière sèche de la composition.

De préférence, cette teneur n'excède pas 40 %.

De préférence encore, cette teneur est comprise entre 20 et 30 %.

Avantageusement, grâce à la composition de revêtement anticorrosion selon l'invention, il n'est pas nécessaire d'ajouter un autre liant filmogène, comme par exemple un ester d'époxy, pour atteindre des performances élevées de résistance à la corrosion.

Un autre constituant essentiel des compositions selon la présente invention est un pigment anticorrosion formant des composés avec les ions fer II et III qui sont très peu solubles ou insolubles dans l'eau.

Par composés très peu solubles ou insolubles dans l'eau, la demanderesse entend dans le cadre de la présente invention, une solubilité dans l'eau à 20 C° au plus égale à celle des phosphates de fer (II ou III), formés dans les conditions de pH de formation du revêtement anticorrosion.

Le pigment anticorrosion est choisi parmi les composés non toxiques, de préférence dans le groupe constitué par :
- les phosphates de solubilité dans l'eau, dans les conditions de températures auxquelles le film sec peut être soumis, au moins égale à celle des phosphates de fer, tels que les phosphates de fer, les phosphates d'alcalinoterreux ou d'aluminium ;
- les phosphates mixtes tels que les phosphates mixtes de zinc et de fer renfermant, le cas échéant, d'autres composés minéraux comme un oxyde de zinc ;
- les silicates tels que les silicates de calcium ou de fer, ou encore les silicates mixtes de calcium et de zinc ;
- les phosphosilicates tels les phosphosilicates de calcium, de strontium et/ou de zinc ;
- les ferrites de zinc ou de calcium.

Avantageusement, le pigment anticorrosion utilisé dans le cadre de l'invention renferme de préférence un ou plusieurs oxydes très peu solubles dans l'eau et basiques tels qu'un oxyde de zinc ou un oxyde d'aluminium.

Parmi les pigments anticorrosion ayant conduit aux performances les plus élevées en tenue au brouillard salin, quand ils sont associés aux constituants précités (a)-(f), éventuellement (g), sélectionnés, on peut citer :
- les phosphates de zinc et de fer, renfermant de l'oxyde de zinc tel que celui commercialisé par la société COLORES HISPANIA sous la dénomination ACTIROX 215 ;
- les phosphosilicates de calcium, de strontium et de zinc tel que celui commercialisé par la société LAWRENCE INDUSTRIE sous la dénomination HALOX SZP 391;
- la ferrite de zinc telle que celle commercialisée par la société BAYER sous la dénomination ANTICOR 70.

Comme indiqué plus haut, la présente invention permet d'éviter l'utilisation des pigments anticorrosion toxiques. A titre d'exemple de pigments anticorrosion toxiques que l'on recommande de ne pas utiliser, on peut citer les chromates, les molybdates, les oxydes de plomb, les pigments renfermant un métal comme le tungstène, le plomb et les composés du bore.

Egalement, certains pigments anticorrosion bien connus de l'homme de métier tels que le phosphate de zinc pur ne sont pas recommandés dans les compositions selon la présente invention car les performances auxquelles ils conduisent ne sont pas satisfaisantes. Ainsi, l'adhérence des revêtements renfermant du phosphate de zinc pur à titre de pigment anti-corrosion sur des supports ferreux est médiocre et la résistance à la corrosion de tels revêtements est également médiocre.

La teneur en pigment anticorrosion peut varier dans de larges limites ; elle est de préférence inférieure ou égale à 30 % en poids de la matière sèche de la composition, des teneurs plus importantes pouvant conduire à une augmentation de la porosité du film.

De préférence encore, cette teneur est supérieure ou égale à 5 % en poids de la matière sèche de la composition.

La granulométrie maximale du pigment anticorrosion doit évidemment être inférieure à l'épaisseur du film sec elle est avantageusement choisie la plus faible possible car ainsi, la résistance à la corrosion est meilleure. De préférence, la taille maximale des grains constituant le pigment anticorrosion est de 30 microns.

Un autre constituant essentiel des compositions selon la présente invention est un agent inhibiteur de corrosion (encore appelé "agent anti flash-rusting") dont la fonction principale est de supprimer le phénomène de corrosion immédiate (encore appelé "flash-rusting"), sans lequel un vernis, du type de celui employé dans le test (A) de sélection du liant filmogène, se colore instantanément en brun. De préférence, l'inhibiteur de corrosion est capable de modifier le temps d'attaque par corrosion d'un article métallique ferreux par une solution aqueuse d'acide chlorhydrique. Afin de vérifier l'efficacité du composé choisi, on procède, de préférence, au test (C) qui suit :

### Test (C) de sélection des inhibiteurs de corrosion

Une éponge métallique ferreuse est plongée dans une solution aqueuse contenant 8 % en poids d'acide chlorhydrique. L'attaque acide du métal de l'éponge provoque l'apparition de bulles d'hydrogène à la surface de l'éponge. Celle-ci remonte rapidement à la surface : ce temps de remontée de référence (tr) est bien entendu fonction des caractéristiques techniques de l'éponge utilisée. Dans le cadre des expérimentations menées par la demanderesse, le temps de remontée de référence, tr, a été de 8 secondes. Lorsque l'on ajoute 0,3 % en poids d'un inhibiteur de corrosion efficace, le temps d'attaque est modifié et, dès lors, le temps de remontée de l'éponge à la surface est augmenté et supérieur à tr.

Par opposition avec le pigment anticorrosion qui est solide et quasiment insoluble dans l'eau, l'agent inhibiteur de corrosion est soluble dans l'eau. En revanche, le composé que l'inhibiteur de corrosion forme avec les ions fer II et/ou fer III est quasiment insoluble voire insoluble dans l'eau dans les conditions habituelles de température.

Des composés ayant une activité inhibitrice de corrosion sont bien connus de l'homme du métier.

A titre d'exemple d'inhibiteur de corrosion convenant à la préparation de compositions selon l'invention, on se référera utilement au tableau (II) figurant dans la partie concernant les exemples de réalisation, en retenant de préférence ceux ayant conduit, dans le cadre du test (C), à un temps de remontée de l'éponge métallique supérieur à celui obtenu dans l'essai témoin.

Egalement, afin de mieux respecter les contraintes environnementales, on recommande d'éviter l'utilisation d'inhibiteur de corrosion toxique, comme par exemple ceux renfermant des nitrites.

La teneur en inhibiteur de corrosion est de préférence limitée car, en raison de sa solubilité dans l'eau, une trop forte teneur risque d'augmenter la sensibilité à l'eau du film sec. C'est pourquoi, elle est avantageusement comprise entre 0,1 et 1 % en poids sur la composition totale prête à l'emploi.

Les compositions selon l'invention renferment également au moins un agent dispersant quand cette fonction n'est pas apportée par un autre constituant des compositions selon l'invention. Cet agent sert essentiellement à désagglomérer les pigments anticorrosion ainsi que divers autres additifs solides pouvant être présents dans ces compositions. Les agents dispersants susceptibles d'être utilisés dans le cadre de la présente invention sont des produits bien connus de l'homme du métier. A titre d'exemple d'agents dispersants convenant bien à l'invention, on peut citer : les polyacrylates de sodium, de potassium et d'ammonium, les silicates alcalins, solubles dans l'eau, qui jouent également le rôle d'inhibiteurs de corrosion.

La teneur en agent dispersant est de préférence comprise entre 0,05 et 0,3 % en poids de la matière sèche de la composition.

Les compositions selon l'invention renferment également au moins un agent antimousse.

Les agents antimousses susceptibles d'être utilisés dans le cadre de la présente invention sont des produits bien connus de l'homme du métier.

A titre d'exemple d'agents antimousse, on peut citer les copolymères polysiloxanes, les polyéthers et les huiles minérales. La teneur en agent antimousse est de préférence comprise entre 0,05 et 0,5 % en poids de la matière sèche de la composition.

Les compositions selon l'invention renferment également au moins un agent de coalescence dont la principale fonction est de favoriser la formation rapide d'un film sec.

Les agents de coalescence susceptibles d'être choisis sont des composés chimiques volatils dans les conditions de formation du film, qui s'éliminent ensuite progressivement du film sec (par opposition avec les agents plastifiants qui sont des composés peu volatils dans les conditions de la technique en cause mais qui risquent d'exsuder à la surface du film sec par incompatibilité avec ce dernier et, dès lors, de compromettre son adhérence avec les couches de finition). De préférence, les agents de coalescence choisis pour préparer une composition de revêtement anticorrosion destiné à être séché à l'air, ont une température d'ébullition faible et une tension de vapeur élevée pour favoriser des propriétés finales du film. Pour ces raisons, dans le cas d'un séchage à l'air ou en air forcé, on recommande de ne pas utiliser, notamment, le monoisobutyrate de 2,2,4 triméthyl 1,3 pentanediol (point d'ébullition : environ 245° C).

A titre d'exemple d'agents de coalescence convenant à l'invention, on peut citer les glycols, les éthers et les esters de glycols et les composés paraffiniques. Le ou les agents de coalescence sont généralement utilisés à raison de 1 à 5 % en poids calculé sur la composition totale prête à l'emploi.

Conformément à l'invention, les compositions de revêtement anticorrosion en phase aqueuse présentent un pH basique : il varie généralement de 7 à 11, mais peut atteindre des valeurs supérieures. De préférence, il est compris entre 8 et 9,5.

Si nécessaire, pour atteindre un pH basique, on additionne aux compositions selon l'invention un régulateur de pH ou agent de neutralisation.

Les agents de neutralisation généralement utilisés sont les amines primaires, secondaires et/ou tertiaires, de structure linéaire et/ou ramifiée, l'ammoniaque et des mélanges de ces composés. On utilise préférentiellement l'ammoniaque et les amines tertiaires à cause de la toxicité potentielle des autres amines qui peuvent conduire à la formation de nitrosamines.

La teneur en agent de neutralisation n'excède pas, de préférence, 1 % en poids de la composition totale prête à l'emploi.

Pour une bonne mise en oeuvre de l'invention, les compositions de revêtement anticorrosion prêtes à l'emploi renfermeront de 45 à 80 % en poids d'eau, de préférence, de 50 à 70% en poids d'eau.

Avantageusement, pour améliorer encore les performances vis à vis de la corrosion, on utilise de l'eau exempte de sels solubles, telle que l'eau distillée, déminéralisée ou désionisée.

Toutefois, des performances satisfaisantes sont obtenues avec l'eau du réseau de distribution urbaine.

Les compositions selon l'invention peuvent renfermer, de manière avantageuse, au moins un agent hydrofugeant ou composé hydrophobe dont la fonction principale est de renforcer le caractère hydrophobe du film sec.

En effet, dans ces conditions, on a encore amélioré la tenue à la corrosion (i.e. tenue au brouillard salin selon la norme ISO 9227) et la tenue à l'eau déminéralisée (par immersion pendant 500 heures, selon la méthode d'essai D27 1327 de Septembre 1988, intitulée "revêtements de peintures - résistance à l'immersion dans l'eau (bac Ford) et prescrite pour les automobiles PEUGEOT et CITROEN).

A titre d'exemple d'agent hydrofugeant, on peut citer les cires de polyéthylène, les cires de polypropylène, les cires de polyamides, les polysiloxanes, les silanes et des mélanges constitués avec les agents hydrofugeants précités. Les agents hydrofugeants préférés sont choisis parmi les polysiloxanes et les silanes. Les agents hydrofugeants précités sont éventuellement sous la forme d'émulsion aqueuse. L'agent hydrofugeant peut être utilisé à raison de 0 à 20% en poids calculé sur la composition totale prête à l'emploi.

Les compositions selon l'invention peuvent également renfermer, de manière avantageuse, des charges minérales finement divisées. Par charges minérales finement divisées, on entend des charges dont la dimension maximale des grains n'excède pas 30 microns, de préférence est inférieure ou égale à 5 microns.

Les charges minérales susceptibles d'être utilisées sont des produits bien connus de l'homme du métier. A titre d'exemple de charges minérales, on peut citer : le carbonate de calcium, le mica, la plastorite, la wollastonite et les oxydes de fer micacés. En revanche, on recommande de ne pas utiliser des charges minérales capables d'entraîner des quantités non négligeables d'air, comme le talc, qui peuvent conduire, par l'inclusion de microbulles d'air, à la formation de défauts dans le film sous la forme de micropiqûres et, ainsi, augmenter les risques d'enrouillement sur ces défauts.

De préférence, on utilise le mica, la wollastonite et les oxydes de fer micacés.

La teneur en charges minérales peut varier dans de larges limites : elle est de préférence inférieure ou égale à 35 % en poids de la matière sèche de la composition, des teneurs plus importantes pouvant conduire à une augmentation de la porosité de film.

Les compositions selon l'invention peuvent également renfermer divers additifs classiquement utilisés dans le domaine en cause, tels que :
- un ou plusieurs agents épaississants servant, dans certaines conditions et pour certaines applications telle l'application à la brosse, à régler la rhéologie finale de la composition de revêtement anticorrosion pour permettre l'application de l'épaisseur voulue et du bon tendu du film.
   A titre d'exemple de tels agents, bien connus de l'homme du métier, on peut citer les polyuréthanes, les polymères acryliques hydrosolubles associatifs et/ou non associatifs, les gommes de xanthane et/ou de guar et les silices pyrogénées. De préférence, on utilise les polyuréthanes, les polymères acryliques associatifs ou une combinaison de ces deux composés. Le ou les agents épaississants sont généralement utilisés à raison de 0 à 3 % en poids calculé sur la composition totale prête à l'emploi. En revanche, on recommande de ne pas utiliser les agents épaississants ayant un fort pouvoir de rétention d'eau, comme les éthers cellulosiques, en raison de la sensibilité à l'eau des revêtements anticorrosion ainsi préparés.
- un ou plusieurs pigments de coloration ou un opacifiant tel que le noir de carbone ou le dioxyde de titane.

En revanche, il convient de ne pas introduire, dans les compositions selon l'invention, des agents susceptibles de favoriser, de façon importante, la mise en solution des ions fer II et III comme certains agents émulsifiants et des agents hydrosolubles capables d'augmenter la reprise d'eau du film.

Les compositions de revêtement anticorrosion selon la présente invention sont avantageusement présentées, avant utilisation, sous forme d'un monocomposant.

Les compositions selon la présente invention sont utiles au revêtement anticorrosion d'éléments métalliques ferreux ou non, traités ou non par phosphatation ou chromation dans les domaines techniques comme par exemple l'automobile, le mobilier métallique, le fûtage et la protection des armatures métalliques du bâtiment.

Comme indiqué plus haut, les supports envisagés pour les compositions de revêtement anticorrosion selon la présente invention sont variés. A titre d'exemple supplémentaire, on peut aussi citer les supports en acier dégraissé ou en acier sablé ou en acier phosphaté fer ou phosphaté zinc ou chromaté.

Les compositions selon l'invention peuvent être appliquées par exemple au trempé ou coulé, à la brosse, à l'aide d'une barre d'application ou par pulvérisation au pistolet. Les conditions de séchage, après application, peuvent être variées et sont déterminées en fonction de la nature chimique du liant filmogène et de son aptitude à former un film sec. Ainsi, le séchage peut être effectué naturellement à l'air, ou en air forcé à une température supérieure à la température ambiante (par exemple de l'ordre de 80° C) ou au four à une température comprise entre environ 120° C et environ 200° C.

Sur les compositions de revêtement anticorrosion selon la présente invention, une fois que le film déposé est sec, on peut appliquer une ou plusieurs couches de finition pour autant qu'elles soient compatibles avec le film protecteur de la corrosion.

D'autres avantages présentés par les compositions selon l'invention apparaîtront plus clairement à la lecture des exemples ci-après.

### I- Sélection des liants filmogènes convenant à la préparation de compositions de revêtement anticorrosion conformes à l'invention

Dans le but de sélectionner des liants filmogènes convenant à la préparation de compositions de revêtement anticorrosion conformes à l'invention, on a préparé et soumis un vernis obtenu à partir d'une dispersion aqueuse d'un polymère acrylique, séché au four (10 minutes à 60°C, puis 20 minutes à 150°C), au test de tenue au brouillard salin dans les conditions du test (A) décrit plus haut.

Les liants filmogènes utilisés ainsi que les résultats obtenus sont recensés dans le tableau (I) ci-après.

**Tableau (I)**

| **Référence commerciale** | **Provenance** | **Nature chimique du liant filmogène présenté sous forme d'une dispersion aqueuse** | **TBS (h)** |
|---|---|---|---|
| Acronal S 760 | BASF | Copolymère styrène-acrylique | 156 |
| Acronal 290 D | BASF | Copolymère styrène-acrylique | 156 |
| DS 910 | Rhône-Poulenc | Copolymère styrène-acrylique | 47 |
| Maincote HG 56 | Rohm & Haas | Polymère acrylique pur(*) | 156 |
| XK62 | Zeneca | Copolymère styrène-acrylique | 94 |
| DS 909 | Rhône-Poulenc | Polymère acrylique pur (*) | 94 |
| DEC 27 | Good Year | Polymère acrylique pur (*) | 94 |
| Luhydran LR 8744 | BASF | Copolymère à base de styrène et d'esters (méth)acryliques, modifié bisphénol-A | 156 |
| Repolem 2141 | Atochem | Polymère acrylique pur (*) | n.d. |
| Plextol BV 595 | Hüls | Polymère acrylique pur (*) | n.d. |

| | | | |
|---|---|---|---|
| TBS : tenue au brouillard salin n.d. : non déterminé. (*) par polymère acrylique pur, on entend un polymère obtenu à partir de monomères (méth)acryliques uniquement | | | |

Le test (A) permet de sélectionner les résines suivantes en séchage air : ACRONAL S 760, ACRONAL 290 D et MAINCOTE HG 56 et en séchage four : LUHYDRAN LR 8744.

### II - Sélection des inhibiteurs de corrosion (test (C))

On a déterminé le temps d'attaque par corrosion dans les conditions du test (C) décrit plus haut afin de quantifier l'efficacité de composés chimiques en tant qu'inhibiteur de corrosion.

Les différents composés chimiques testés (leur référence, nature chimique et provenance) ainsi que les résultats du test (c) sont rassemblés dans le tableau (II) ci-après.

**Tableau (II)**

| référence commerciale | Provenance | Nature chimique | Résultats du test (C) en secondes |
|---|---|---|---|
| Témoin (exempt d'inhibiteur de corrosion) | - | - | 8 s. |
| Sérad FA 179 | HÜLS | Composé organo-métallique + nitrites | 47 s. |
| Sérad FA 579 | HÜLS | Composé organo-métallique | 47 s. |
| Cotrol 18-8 | Caschem Inc. | Ester aminé | 16 s. |
| AMP 90 | Angus chem.co. | 2-amino-2-méthyl-1-propanol | 7 s. |
| Emadox NA | Labema | Métaborate de calcium + nitrite | 8 s. |
| Emadox D 520 | Labema | Métaborate de calcium | 8 s. |
| Rhodafac RA 600 | Rhône-Poulenc | Alkylétherphosphate | 2 min. et 5 s. |
| Irgacor 153 | Ciba-Geigy | 2(benzothiazol-2-yl-thio) succinic acid di(C12-C14 sel d'alkylammonium) | 2 min. et 40 s. |
| Naccor 1151 | King Ind. | Sel de calcium de l'acide dinonylnaphtalène sulfonique | 11 s. |

Le test (C) permet de sélectionner les composés convenant à la présente invention en tant qu'inhibiteur de corrosion, en l'occurrence les composés correspondants aux références commerciales suivantes :

SERAD FA 579, COTROL 18-8, IRGACOR 153, RHODAFAC RA 600, à l'exception du SERAD FA 179 en raison de la présence de nitrites.

### III - Préparation des compositions

### III.1 Matières premières utilisées

Les matières premières utilisées, autres que celles présentées dans les tableaux (I) et (II), sont recensées dans le tableau III ci-après.

**TABLEAU III**

| **Fonction du composé** | **Référence commerciale** | **Provenance** | **Nature chimique** |
|---|---|---|---|
| Pigment anticorrosion | HALOX SZP 391 - | Laurence Industries | Phosphosilicate de Ca, Zn et Sr |
| | ACTIROX 215 | COLORES HISPANIA | Phosphates de Zn et Fe |
| Agent dispersant | DISPEX A40 | Allied Colloid | Polyacrylate d'ammonium |
| | COATEX P 90 | COATEX | Polyacrylate d'ammonium |
| Agent antimousse | NOPCO 8034 | HENKEL | Huile minérale |
| | TEGOFOAM 810 | TEGO | Polysiloxane polyéther |
| Agent de coalescence | | | Ether de butyldiglycol |
| Charges minérales | WOLLASTOKUP 10 AS (*) | NYCO | Wollastonite traitée avec un composé aminosilane |
| | WOLLASTOKUP 10 WC (*) | NYCO | Wollastonite |
| | LAMINOX F (*) | OMYA | Oxyde de fer micacé |
| | MICARVOR 20 (*) | KAOLINS ARVOR | Mica |
| Agent hydrofugeant | WACKER BS 1306 | WACKER | Emulsion à 55 % de silicone |
| | ADDITIF 40 | DOW CORNING | 100 % époxy-propyl méthoxy silane |
| | AQUACER 541 | BYX CERA | Emulsion à 50 % d'une cire |
| Agent épaississant | RHEO 2100 | COATEX | Polyacrylique hydrosoluble |
| | VISCOATEX 46 | COATEX | Polyacrylique hydrosoluble |
| | ACRYSOL RM 2020 | RHOM ET HAAS | Polyuréthane |
| Agent de neutralisation | | | Ammoniaque à 28 % |
| Agent de coloration | Noir spécial 4 | DEGUSSA | Noir de carbone |
| | TiO₂ | | TiO₂ |
| Agent mouillant | DEUTEROL 201E | DEUTERON | Diol acétylénique |
| | SURFYNOL 104 SURFYNOL 104 | AIR PRODUCTS AIR PRODUCTS | Diol acétylénique Diol acétylénique |

| | | | |
|---|---|---|---|
| (*) Ces charges minérales peuvent également servir en tant que pigment anticorrosion. | | | |

### III.2 Mode opératoire

Dans un broyeur réfrigéré pourvu de microéléments en zircone-silice, on disperse les pigments anticorrosion et charges dans une partie de l'eau distillée renfermant l'agent de coalescence, l'agent dispersant, une partie de l'agent antimousse et de l'ammoniaque. Après 15 mn environ de broyage, quand le mélange est parfaitement homogène, on incorpore, sous agitation lente, la quote-part d'eau restante ainsi que le complément d'antimousse. On filtre alors l'ensemble sous vide, sur une toile en polyamide (diamètre des pores : 30 µm). Au filtrat ainsi obtenu, on ajoute sous agitation le liant, l'agent inhibiteur de corrosion et l'épaississant. Si nécessaire, on ajuste le pH de la peinture par ajout d'ammoniaque.

### IV - Test de résistance au brouillard salin (norme ISO 9227)

Les compositions monocomposantes sont appliquées à la barre d'application en une seule passe pour former un film qui, après séchage (séchage four : 10 mn à 60°C, puis 20 mn à 150°C ou séchage air : 1 semaine à température ambiante), présente une épaisseur sèche de l'ordre de 30 microns sur une tôle dégraissée (non phosphatée) ou phosphatée fer ; la résistance à la corrosion des éprouvettes est alors déterminée en les soumettant au test du brouillard salin jusqu'à détérioration du revêtement. La moyenne des résultats obtenus sur deux échantillons est indiquée dans les exemples ci-après.

Dans un souci de simplification, dans la suite de cette demande, l'abréviation "TBS" désignera la tenue au brouillard salin.

### V- EXEMPLES

### Exemples 1 et 2

Les compositions, objet des exemples 1 et 2, n'ont pas été opacifiées pour permettre une meilleure observation des phénomènes de corrosion susceptibles d'apparaître à l'interface entre le film et le support.

Les compositions testées et les résultats obtenus après 70 heures d'exposition au brouillard salin, dans les conditions de la norme ISO 9227, sont rassemblés dans les tableaux IV-A et IV-B

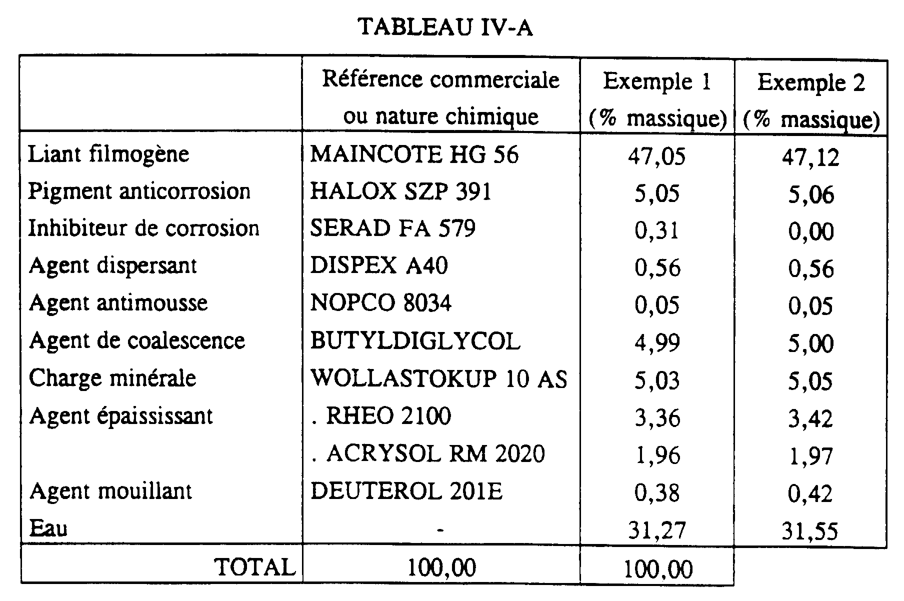

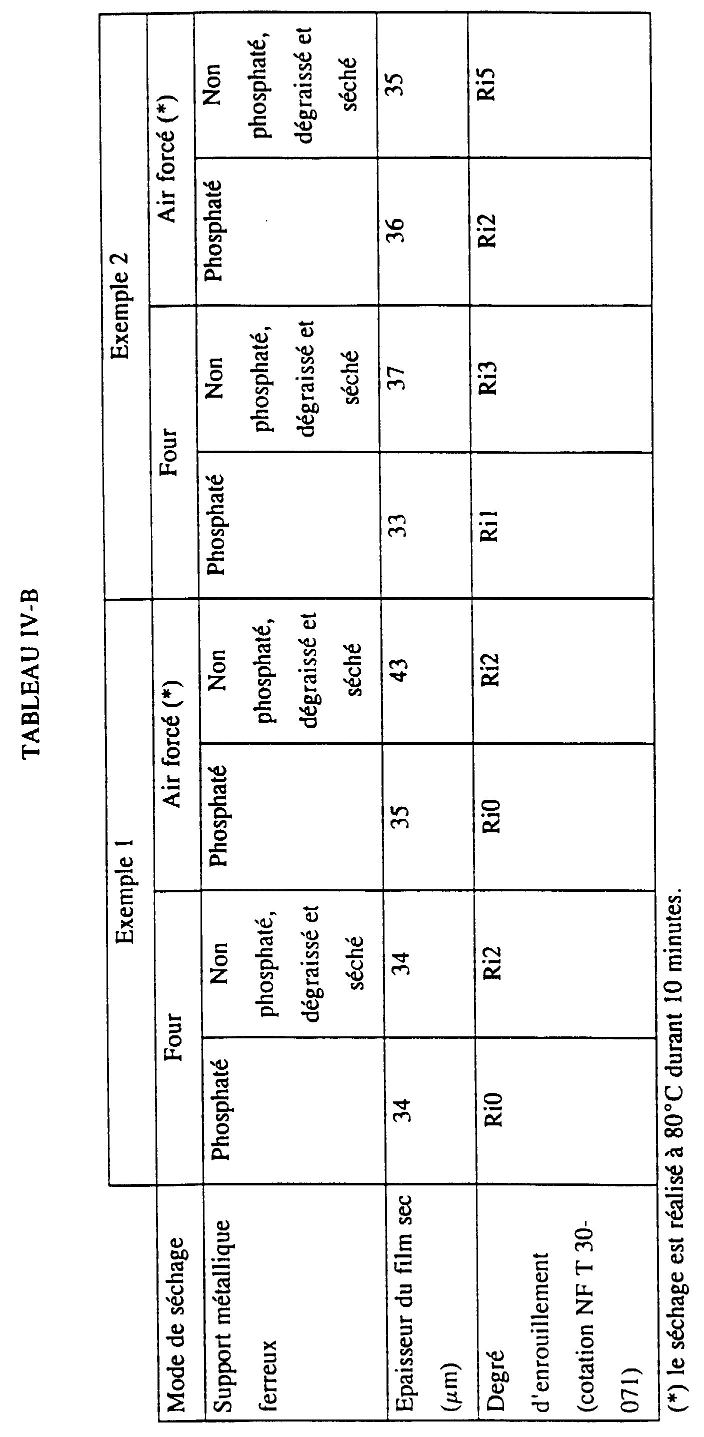

Après 70 heures d'exposition au brouillard salin, dans les conditions de la norme ISO 9227, l'enrouillement sur des plaques métalliques ferreuses, selon le cas non-phosphatées ou phosphatées, dégraissées et séchées, est diminué très nettement grâce à la présence de l'inhibiteur de corrosion, le SERAD FA 579, comme on peut le constater à la lecture de l'évaluation du degré d'enrouillement faite selon le mode de cotation indiquée dans la même norme NF T 30-071.

### Exemples 3 à 13

Les compositions et les résultats des exemples 3 à 13 sont rassemblés dans les tableaux V et VI ci-après.

**TABLEAU V**

| | Référence commerciale ou nature chimique ou code | Exemples 3 à 13 (% massique) |
|---|---|---|
| Liant filmogène (à 50 % d'extrait sec) | **L** | 48 |
| Pigment anticorrosion | HALOX SZP 391 | 5,0 |
| Inhibiteur de corrosion | SERAD FA 579 | 0,3 |
| Agent dispersant | DISPEX A40 | 0,6 |
| Agent antimousse | NOPCO 8034 | 0,05 |
| Agent de coalescence | Ether de butyldiglycol | 4,8 |
| Charge minérale | Wollastokup 10 AS | 5,0 |
| Agent hydrofugeant | **H** | 0 ou 1,2 (en % en matière active) |
| Agent épaississant | RHEO 2100 diluée à 15% | 3,0 |
| Agent de neutralisation | Ammoniaque à 28 % | (*) |
| Agent mouillant | DEUTEROL 201E | 0,4 |
| Noir de carbone | SPECIAL 4 | 1,0 |
| Eau | - | QSP 100 % |

| | | |
|---|---|---|
| (*) quantité nécessaire pour atteindre un pH de l'ordre de 8,6. | | |

Les compositions correspondant aux exemples 3 à 13 sont appliquées sur des tôles phosphatées, pour atteindre une épaisseur sèche de 35 microns environ.

Le séchage dans les exemples 3 à 5 et 8 à 13 est réalisé à température ambiante pendant une semaine et au four (10 minutes à 60°C, puis 20 minutes à 150°C) dans les exemples 6 et 7.

**TABLEAU VI**

| **Exemple** | **L** | **H** | **TBS (h)** |
|---|---|---|---|
| 3 | Maincote HG 56 | néant | 140 |
| 4 | Maincote HG 56 | Additif 40 | 890 |
| 5 | Maincote HG 56 | Aquacer 541 | 140 |
| 6 | Luhydran 8744 | néant | 720 |
| 7 | Luhydran 8744 | Additif 40 | 720 |
| 8 | Acronal 290 D | néant | 140 |
| 9 | Acronal 290 D | Additif 40 | 720 |
| 10 | Acronal 290 D | WACKER BS 1306 | 140 |
| 11 | Acronal S 760 | néant | 140 |
| 12 | Acronal S 760 | Additif 40 | 720 |
| 13 | Acronal S 760 | WACKER BS 1306 | 720 |

De la comparaison des résultats obtenus, il ressort que l'agent hydrofugeant commercialisé sous la dénomination "ADDITIF 40" (nature chimique : polysiloxane) améliore significativement les performances au brouillard salin.

De plus, on observe, dans les exemples 4, 5, 7, 9, 10, 12 et 13, que la présence d'un agent hydrofugeant permet de diminuer nettement le degré d'enrouillement ainsi que l'importance du cloquage.

Enfin, dans les exemples 3 à 13, il convient de noter que les résultats de tenue au brouillard salin, en l'absence d'agent hydrofugeant, sont inférieurs à ceux escomptés. Ceci résulte essentiellement de la charge minérale employée, la charge commercialisée sous la dénomination WOLLASTOKUP 10 AS, qui est une wollastonite traitée avec un aminosilane. En effet, cette charge minérale est sensible à l'eau et favorise la reprise d'eau du revêtement anticorrosion.

De fait, si on remplace cette charge par la "Wollastokup 10 WC", dans les exemples précités, la TBS des revêtements anticorrosion réalisés avec les formules exempts d'agent hydrofugeant, est améliorée de façon notable.

Ainsi, si on reprend les conditions opératoires de l'exemple 8, et procède au remplacement de :
- la WOLLASTOKUP 10 AS par la Wollastokup 10 WC,
- l'HALOX S2P 391 par l'ACTIROX 215,
la TBS sur tôles dégraissées (non phosphatées) est de 120 heures et de 410 heures sur tôles phosphatées.

De même, dans l'exemple 9, si on limite les modifications au remplacement de la WOLLASTOKUP 10 AS par la WOLLASTOKUP 10 WC, toutes les autres conditions opératoires étant maintenues par ailleurs, la TBS sur tôles dégraissées (non phosphatées) est de 280 heures et de 920 heures sur tôles phosphatées.

### VII - Exemples 14 à 19

Les compositions et les résultats des exemples 14 à 19 sont rassemblés dans le tableau V précité et le tableau VII ci-après.

La constitution des compositions des exemples 14 à 19 est indiquée dans le tableau V ci-avant et complétée par le tableau VII ci-après.

Ces compositions sont appliquées sur des tôles phosphatées.

Le séchage, dans les exemples 14 à 19, est réalisé à température ambiante pendant une semaine. L'épaisseur du film sec est de l'ordre de 30 microns.

**TABLEAU VII**

| **Exemple** | **L** | **H** | **TBS (h)** |
|---|---|---|---|
| 14 | DS 909 | néant | 60 |
| 15 | DEC 27 | néant | 60 |
| 16 | PLEXTOL BV 595 | néant | 60 |
| 17 | PLEXTOL BV 595 | Additif 40 | 110 |
| 18 | REPOLEM 2141 | néant | 60 |
| 19 | REPOLEM 2141 | Additif 40 | 110 |

Les résultats des exemples 14 et 15 confirment les résultats apparaissant dans le tableau (I) ci-avant pour les liants commercialisés sous la dénomination DS 909 et DEC 27.

### VIII Exemples 20 à 22

Les compositions testées sont rassemblées dans le tableau VIII ci-après.

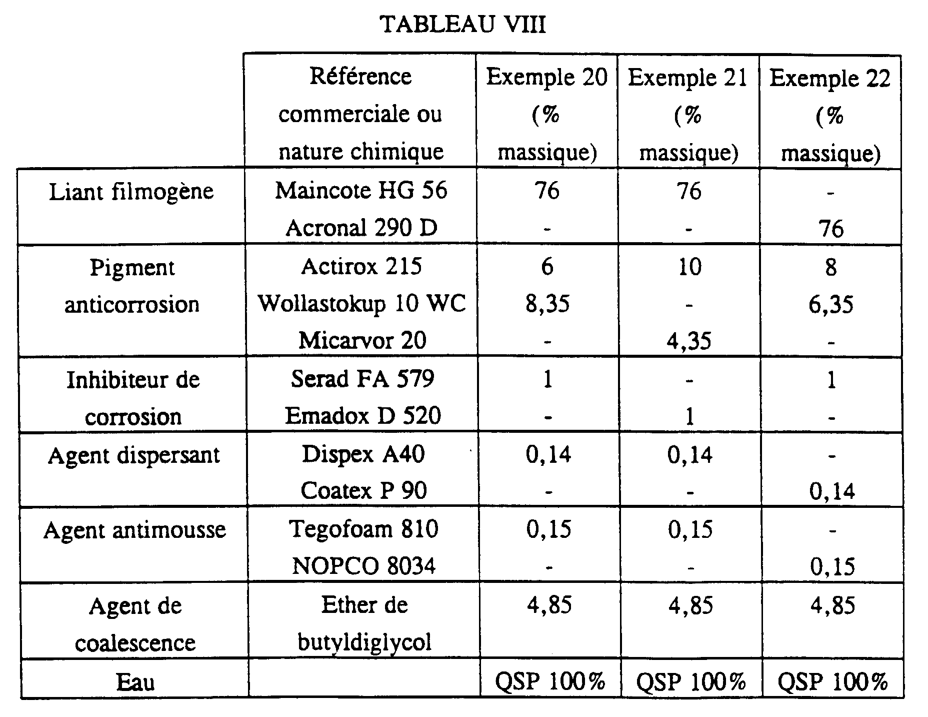

Les compositions correspondant aux exemples 20 à 22 sont appliquées sur des tôles non phosphatées, puis séchées à température ambiante pendant une semaine. L'épaisseur du film sec est de 30 microns.

Les résultats des exemples 20 à 22 sont rassemblés dans le tableau IX ci-après.

**TABLEAU IX**

| **Exemple** | **TBS (h)** |
|---|---|
| 20 | 250 |
| 21 | 170 |
| 22 | 160 |

## Revendications

1. Compositions de revêtement anticorrosion, en phase aqueuse, présentant un pH basique et caractérisée en ce qu'elles comprennent essentiellement :
a) au moins un liant filmogène sous forme d'une dispersion aqueuse d'un polymère acrylique, de préférence un copolymère styrène-acrylique éventuellement modifié, conduisant, après séchage et/ou polymérisation, à la formation d'un film hydrophobe ;
b) au moins un pigment anticorrosion, peu ou pas soluble dans l'eau, ne contenant pas d'élément toxique dans le groupe comprenant le tungstène, le chrome à l'état d'oxydation VI, le plomb, le molybdène et le bore, formant, avec les ions fer II et III, des composés qui sont très peu solubles ou insolubles dans l'eau ;
c) au moins un agent inhibiteur de corrosion, soluble dans l'eau, ne renfermant pas de nitrites et formant, avec les ions fer II ou fer III, des composés qui sont très peu solubles ou insolubles dans l'eau, pour éviter le phénomène de corrosion immédiate ;
d) au moins un agent dispersant quand cette fonction n'est pas apportée par un autre constituant des compositions ;
e) au moins un agent antimousse ;
f) au moins un agent de coalescence ;
g) et, éventuellement, un ou des additifs tels que des charges minérales, des agents épaississants, des agents de neutralisation, des pigments pour la coloration du film, ou des mélanges des additifs précités.
et en ce que ledit liant filmogène vérifie le test (A) suivant de tenue au brouillard salin d'un vernis :
(1) un vernis est préparé en mélangeant (en % pondéraux) :
- 94 % de liant filmogène sous forme d'une dispersion aqueuse d'un polymère acrylique ;
- 5 % d'un agent de coalescence ;
- 0,3 % d'un agent inhibiteur de corrosion, qui est le composé organométallique commercialisé sous la dénomination Sérad FA 579 par la société HÜLS ;
- 0,4 % d'un agent mouillant, en l'occurrence le produit fabriqué sous la dénomination DEUTEROL 201E par DEUTERON ;
- 0,3 % d'un agent épaississant, en l'occurrence un polymère acrylique hydrosoluble commercialisé sous la dénomination Rhéo 2100 par la société COATEX ;
- de l'ammoniaque : la quantité nécessaire pour ajuster le pH à environ 8,6.
(2) Un échantillon de ce vernis est appliqué sur des plaques métalliques ferreuses, phosphatées, dégraissées au solvant et séchées à l'acétone, en couche humide de 120 microns d'épaisseur à la barre d'application pour former un film qui est séché selon la destination industrielle finale :
- au four pendant 10 minutes à 60° C puis 20 minutes à 150° C, ou
- à température ambiante pendant une semaine.
(3) Les plaques métalliques ferreuses ainsi traitées sont ensuite soumises au test de tenue au brouillard salin dans les conditions de la norme ISO 9227.
(4) Les liants filmogènes acceptables sont ceux avec lesquels on peut former un vernis présentant une tenue au brouillard salin au moins égale à 120 ± 20 heures.

2. Compositions selon la revendication 1, caractérisées en ce que l'agent inhibiteur de corrosion est capable de modifier et d'augmenter le temps d'attaque par corrosion d'un article métallique ferreux par une solution aqueuse d'acide chlorhydrique.

3. Compositions selon la revendication 1, caractérisées en ce que la teneur en polymère acrylique est au moins égale à 15 % en poids calculée sur la matière sèche de la composition.

4. Compositions selon la revendication 3, caractérisées en ce que cette teneur n'excède pas 40 %.

5. Composition selon la revendication 4, caractérisées en ce que cette teneur est comprise entre 20 et 30%.

6. Compositions selon l'une des revendications 1 à 5, caractérisées en ce que la solubilité dans l'eau à 20°C des composés formés avec le pigment anticorrosion et les ions fer II et III est au plus égale à celle des phosphates de fer (II ou III) formés dans les conditions de pH de formation du revêtement anticorrosion.

7. Compositions selon la revendication 6, caractérisées en ce que le pigment anticorrosion est choisi dans le groupe constitué par :
- les phosphates de solubilité dans l'eau, dans les conditions de températures auxquelles le film sec peut être soumis, au moins égale à celle des phosphates de fer tels que les phosphates de fer, les phosphates d'alcalinoterreux ou d'aluminium ;
- les phosphates mixtes tels que les phosphates mixtes de zinc et de fer renfermant, le cas échéant, d'autres composés minéraux comme un oxyde de zinc ;
- les silicates tels que les silicates de calcium ou de fer, ou encore les silicates mixtes de calcium et de zinc ;
- les phosphosilicates tels les phosphosilicates de calcium, de strontium et/ou de zinc ;
- les ferrites de zinc ou de calcium.

8. Compositions selon la revendication 1, 6 ou 7, caractérisées en ce que le pigment anticorrosion renferme un ou plusieurs oxydes basiques qui sont très peu solubles dans l'eau.

9. Compositions selon la revendication 8, caractérisées en ce que le pigment anticorrosion est choisi parmi les phosphates de zinc et de fer, renfermant de l'oxyde de zinc.

10. Compositions selon l'une des revendications 1 ou 6 à 8, caractérisées en ce que le pigment anticorrosion est choisi parmi les phosphosilicates de calcium, de strontium et de zinc.

11. Compositions selon l'une des revendications 1 ou 6 à 8, caractérisées en ce que le pigment anticorrosion est une ferrite de zinc.

12. Compositions selon l'une des revendications 1, ou 6 à 11, caractérisées en ce que la teneur en pigment anticorrosion est inférieure ou égale à 30 % en poids de la matière sèche de la composition.

13. Compositions selon la revendication 12, caractérisées en ce que cette teneur est supérieure ou égale à 5 %.

14. Compositions selon la revendication 1, caractérisées en ce que la teneur en inhibiteur de corrosion est comprise entre 0,1 et 1 % en poids sur la composition totale prête à l'emploi.

15. Compositions selon la revendication 1, caractérisées en ce que la teneur en agent dispersant est comprise entre 0,05 et 0,3 % en poids de la matière sèche de la composition.

16. Compositions selon la revendication 1, caractérisées en ce que la teneur en agent antimousse est comprise entre 0,05 et 0,5 % en poids de la matière sèche de la composition.

17. Compositions selon la revendication 1, caractérisées en ce que la teneur en agent de coalescence est comprise entre 1 et 5 % en poids calculé sur la composition totale prête à l'emploi.

18. Compositions selon l'une quelconque des revendications précédentes, caractérisées en ce qu'elle renferme également au moins un agent hydrofugeant.

19. Compositions selon la revendication 18, caractérisées en ce que l'agent hydrofugeant est choisi dans le groupe constitué par les cires de polyéthylène, les cires de polypropylène, les cires de polyamides, les polysiloxanes, les silanes et des mélanges constitués avec les agents hydrofugeants précités, de préférence parmi les polysiloxanes et les silanes.

20. Compositions selon l'une quelconque des revendications précédentes, caractérisées en ce qu'elle renferme également au moins une charge minérale.

21. Compositions selon la revendication 20, caractérisées en ce que la charge est un mica et/ou une wollastonite et/ou des oxydes de fer micacés.

22. Compositions selon l'une quelconque des revendications précédentes, caractérisées en ce que son pH est compris entre 7 et 11, de préférence entre 8 et 9,5.

23. Compositions selon la revendication 18, caractérisées en ce que la teneur en agent hydrofugeant est comprise entre 0 et 20 % en poids, calculée sur la composition totale prête à l'emploi.

24. Utilisation des compositions selon l'une quelconque des revendications précédentes en vue de l'obtention de revêtement d'éléments métalliques ferreux ou non, traités ou non par phosphatation ou chromation dans les domaines techniques comme, par exemple, l'automobile, le mobilier métallique, le fûtage et la protection des armatures métalliques du bâtiment.

25. Revêtement anticorrosion d'épaisseur de film sec au plus égale à environ 50 microns, réalisé à l'aide de l'une quelconque des compositions définies dans les revendications 1 à 23 et présentant une tenue au brouillard salin, dans les conditions de la norme ISO 9227, de :
- pour une épaisseur de film sec de l'ordre de 50 microns, 250 h (± 50 h) minimum sur tôles dégraissées et 500 h (± 100 h) minimum sur tôles phosphatées ;
- pour une épaisseur de film sec de l'ordre de 30 microns, 120 h (± 25 h) minimum sur tôles dégraissées et 250 h (± 50 h) sur tôles phosphatées.

## Patentansprüche

1. Korrosionshemmende Beschichtungsmittel-Zusammensetzungen als wäßrige Phase mit einem basischen pH-Wert, dadurch gekennzeichnet, daß sie im wesentlichen enthalten:
a) ein filmbildendes Bindemittel in Form einer wäßrigen Dispersion eines Acrylpolymers, vorzugsweise ein eventuell modifiziertes Styrol-Acryl-Copolymer, das nach Trocknung und/oder Polymerisation zur Bildung eines hydrophoben Films führt;
b) wenigstens ein korrosionshemmendes Pigment, wenig oder nicht in Wasser löslich, das keine toxischen Elemente aus der Gruppe enthält, die Wolfram, Chrom im Oxidationszustand VI, Blei, Molybdän und Bor umfaßt und mit den Eisen(II und III)-Ionen Verbindungen bildet, die im Wasser sehr wenig löslich oder unlöslich sind;
c) wenigstens ein wasserlösliches korrosionshemmendes Mittel, das keine Nitrite enthält und mit den Eisen(II)- oder Eisen(III)-Ionen Verbindungen bildet, die im Wasser sehr wenig löslich oder unlöslich sind, um das Phänomen sofortiger Korrosion zu verhindern;
d) wenigstens ein Dispergiermittel, wenn diese Funktion nicht durch einen anderen Bestandteil der Zusammensetzungen erfüllt wird;
e) wenigstens ein Schaumgegenmittel;
f) wenigstens ein Koaleszenzmittel;
g) und eventuell ein oder mehrere Additive wie mineralische Stoffe, Verdickungsmittel, Neutralisierungsmittel, Pigmente zur Färbung des Films oder Mischungen der vorerwähnten Additive;
und dadurch gekennzeichnet, daß das genannte filmbildende Bindemittel den folgenden Salzsprühnebel-Widerstandstest (A) eines Firnis bzw. Lacks verifiziert :
(1) Herstellen eines Lacks durch Mischen (in Gew.%) von:
- 94 % filmbildendes Bindemittel in Form einer wäßrigen Dispersion eines Acrylpolymers;
- 5 % eines Koaleszenzmittels;
- 0,3 % eines korrosionshemmenden Mittels, das die unter der Bezeichnung Sérad FA 579 durch die Firma HÜLS vermarktete organometallische Verbindung ist;
- 0,4 % eines Netzmittels, im gegebenen Fall das unter der Bezeichnung DEUTEROL 201E durch DEUTERON hergestellte Produkt;
- 0,3 % eines Verdickungsmittels, im gegebenen Fall ein durch die Firma COATEX unter der Bezeichnung Rhéo 2100 vermarktetes wasserlösliches Acrylpolymer;
- Ammoniak in erforderlicher Menge, um den pH-Wert auf ungefähr 8,6 einzustellen.
(2) Eine Probe dieses Lacks wird mit dem Auftragstab auf eisenhaltige, phosphatierte, mit Lösungsmittel entfettete und mit Aceton getrocknete Metallplatten als feuchte Schicht von 120µm Dicke aufgetragen, um einen Film zu bilden, der entsprechend der endgültigen industriellen Bestimmung getrocknet wird:
- im Ofen während 10 Minuten bei 60°C und dann 20 Minuten bei 150°C, oder
- während einer Woche bei Umgebungstemperatur.
(3) Die eisenhaltigen Metallplatten werden anschließend dem Salzsprühnebel-Widerstandstest gemäß den Bedingungen der ISO-Norm 9227 unterzogen.
(4) Die akzeptablen filmbildenden Bindemittel sind diejenigen, mit denen man einen Lack bilden kann, der eine Salzsprühnebel-Widerstandsfähigkeit von wenigstens gleich 120 ± 20 Stunden aufweist.

2. Zusammensetzungen nach Anspruch 1, dadurch gekennzeichnet, daß das korrosionshemmende Mittel fähig ist, die Zeit eines Korrosionsangriffs auf einen eisenhaltigen Metallartikel durch eine wäßrige Salzsäurelösung zu modifizieren und zu erhöhen.

3. Zusammensetzungen nach Anspruch 1, dadurch gekennzeichnet, daß der Acrylpolymer-Gehalt wenigstens gleich 15 Gew.% beträgt, berechnet aufgrund der Trockensubstanz der Zusammensetzung.

4. Zusammensetzungen nach Anspruch 3, dadurch gekennzeichnet, daß dieser Gehalt 40% nicht überschreitet.

5. Zusammensetzungen nach Anspruch 4, dadurch gekennzeichnet, daß dieser Gehalt zwischen 20 und 30% enthalten ist.

6. Zusammensetzungen nach einem der Ansprüche 1 bis 5, dadurch gekennzeichnet, daß die Löslichkeit der mit dem korrosionshemmenden Pigment und den Eisen (II und III)-Ionen gebildeten Verbindungen im Wasser mit 20°C höchstens gleich derjenigen der Eisen(II oder III)-Phosphate ist, die sich unter den pH-Bedingungen der Bildung der korrosionshemmenden Beschichtung bilden.

7. Zusammensetzungen nach Anspruch 6, dadurch gekennzeichnet, daß das korrosionshemmende Pigment aus der Gruppe gewählt wird, die gebildet wird durch:
- Phosphate, im Wasser löslich bei Temperaturbedingungen, denen der trockene Film ausgesetzt sein kann, wenigstens gleich derjenigen der Eisenphosphate, wie z.B. die Eisenphosphate, die erdalkalischen oder Aluminium-Phosphate;
- gemischte Phosphate, wie z.B. die gemischen Zink- und Eisen-Phosphate, die ggf. weitere mineralische bzw. anorganische Verbindungen wie ein Zinkoxid enthalten;
- Silikate wie z.B. die Kalzium- oder Eisensilikate oder auch gemischte Kalzium- und Zinksilikate;
- Phosphorsilikate wie z.B. die Kalzium-, Strontium- und/oder Zink-Phosphorsilikate;
- Zink- oder Kalziumferrite.

8. Zusammensetzungen nach Anspruch 1, 6 oder 7, dadurch gekennzeichnet, daß das korrosionshemmende Pigment ein oder mehrere basische Oxide enthält, die sehr wenig wasserlöslich sind.

9. Zusammensetzungen nach Anspruch 8, dadurch gekennzeichnet, daß das korrosionshemmende Pigment, das Zinkoxyd enthält, unter den Zink- und Eisenphosphaten ausgewält wird.

10. Zusammensetzungen nach einem der Ansprüche 1 oder 6 bis 8, dadurch gekennzeichnet, daß das korrosionshemmende Pigment ausgewählt wird unter den Kalzium-, Strontium- und Zink-Phosphorsilikaten.

11. Zusammensetzungen nach einem der Ansprüche 1 oder 6 bis 8, dadurch gekennzeichnet, daß das korrosionshemmende Pigment ein Zinkferrit ist.

12. Zusammensetzungen nach einem der Ansprüche 1 oder 6 bis 11, dadurch gekennzeichnet, daß der Gehalt an korrosionshemmendem Pigment niedriger als oder gleich 30 Gew.% der Trockensubstanz der Zusammensetzung ist.

13. Zusammensetzungen nach Anspruch 12, dadurch gekennzeichnet, daß dieser Gehalt höher als oder gleich 5 % ist.

14. Zusammensetzungen nach Anspruch 1, dadurch gekennzeichnet, daß der Korrosionsinhibitor-Gehalt der gebrauchsfertigen Gesamtzusammensetzung zwischen 0,1 und 1 Gew.% enthalten ist.

15. Zusammensetzungen nach Anspruch 1, dadurch gekennzeichnet, daß der Dispergiermittelgehalt der Trockensubstanz der Zusammensetzung zwischen 0,05 und 0,3 Gew.% enthalten ist.

16. Zusammensetzungen nach Anspruch 1, dadurch gekennzeichnet, daß der Schaumgegenmittel-Gehalt der Trockensubstanz der Zusammensetzung zwischen 0,05 und 0,5 Gew.% enthalten ist.

17. Zusammensetzungen nach Anspruch 1, dadurch gekennzeichnet, daß der Koaleszenzmittelgehalt der gebrauchsfertigen Gesamtzusammensetzung zwischen 1 und 5 Gew.% enthalten ist.

18. Zusammensetzungen nach einem der vorangehenden Ansprüche, dadurch gekennzeichnet, daß sie auch wenigstens ein wasserabstoßendes Mittel enthält.

19. Zusammensetzungen nach Anspruch 18, dadurch gekennzeichnet, daß das wasserabstoßende Mittel aus der Gruppe, gebildet durch die Polyethylen-Wachse, die Polypropylen-Wachse, die Polyamid-Wachse, die Polysiloxane, die Silane, und Mischungen, gebildet mit den vorerwähnten wasserabstoßenden Mitteln, vorzugsweise zwischen den Polysiloxanen und den Silanengewählt wird.

20. Zusammensetzungen nach einem der vorangehenden Ansprüche, dadurch gekennzeichnet, daß sie auch wenigstens einen mineralischen Stoff enthält.

21. Zusammensetzungen nach Anspruch 20, dadurch gekennzeichnet, daß der Stoff ein Glimmer und/oder ein Wollastonit ist und/oder glimmerhaltige Eisenoxide.

22. Zusammensetzungen nach einem der vorangehenden Ansprüche, dadurch gekennzeichnet, daß ihr pH-Wert zwischen 7 und 11 und vorzugsweise zwischen 8 und 9,5 enthalten ist.

23. Zusammensetzungen nach Anspruch 18, dadurch gekennzeichnet, daß der Gehalt der gebrauchsfertigen Gesamtzusammensetzung an wasserabstoßendem Mittel zwischen 0 und 20 Gew.% enthalten ist.

24. Verwendung der Zusammensetzungen nach einem der vorangehenden Ansprüche hinsichtlich der Herstellung einer Beschichtung von eisenhaltigen oder nichteisenhaltigen Metallelementen, mittels Phosphatierung oder Chromierung behandelt oder nicht, auf den technischen Gebieten wie z.B. dem Fahrzeugbau, dem Metallmobiliar, den Fässern bzw. Beschlägen und dem Schutz der Metallarmierungen von Gebäuden.

25. Korrosionshemmende Beschichtung mit der Dicke eines Trockenfilms von höchstens ungefähr 50µm, hergestellt mit Hilfe irgendeiner der in den Ansprüchen 1 bis 23 definierten Zusammensetzungen und mit einer Salzsprühnebel-Widerstandsfähigkeit innerhalb der Bedingungen der ISO-Norm 9227 von:
- für eine Trockenfilmdichte der Größenordnung 50µm wenigstens 250h (±50h) auf entfetteten Blechen und wenigstens 500h (±100h) auf phosphatierten Blechen;
- für eine Trockenfilmdichte der Größenordnung 30µm wenigstens 120h (±25h) auf entfetteten Blechen und 250h (±50h) auf phosphatierten Blechen.

## Claims

1. Anticorrosion coating compositions in the aqueous phase having a basic pH and characterised in that they essentially comprise:
a) at least one film-forming binder in the form of an aqueous dispersion of an acrylic polymer, preferably an optionally modified styrene/acrylic copolymer leading, after drying and/or polymerisation, to the formation of a hydrophobic film;
b) at least one anticorrosion pigment which is sparingly soluble or insoluble in water and does not contain a toxic element in the group comprising tungsten, chromium in the VI state of oxidation, lead, molybdenum and boron forming, with iron II and III ions compounds which are very sparingly soluble or insoluble in water;
c) at least one water-soluble corrosion inhibiting agent not containing nitrites and forming, with the iron II or iron III ions, compounds which are very sparingly soluble or insoluble in water to avoid the phenomenon of immediate corrosion;
d) at least one dispersing agent if this function is not fulfilled by another component of the compositions;
e) at least one antifoaming agent;
f) at least one coalescencing agent;
g) and, optionally, one or more additives such as mineral fillers, thickening agents, neutralising agents, film-colouring pigments or mixtures of the aforementioned additives,
and in that said film-forming binder verifies the following test (A) of saline spray resistance of a varnish:
(1) a varnish is prepared by mixing (in % by weight):
- 94% of film-forming binder in the form of an aqueous dispersion of an acrylic polymer;
- 5% of a coalescing agent;
- 0.3% of a corrosion inhibiting agent which is the organometallic compound sold under the name Sérad FA 579 by the company HÜLS;
- 0.4% of a wetting agent, in this instance the product manufactured under the name DEUTEROL 201E by DEUTERON;
- 0.3% of a thickening agent, in this instance a water-soluble acrylic polymer sold under the name Rhéo 2100 by the company COATEX;
- ammonia: the quantity required to adjust the pH to about 8.6.
(2) A sample of this varnish is applied to ferrous metallic plates which have been phosphated, degreased using a solvent and dried with acetone in a moist layer having a thickness of 120 microns using an application rod to form a film which is dried according to the final industrial destination:
- in an oven for 10 minutes at 60°C then 20 minutes at 150°C, or
- at ambient temperature for a week.
(3) The ferrous metallic plates treated in this way are then subjected to the saline spray resistance test under the conditions of ISO standard 9227.
(4) Acceptable film-forming binders are those with which a varnish having saline spray resistance of at least 120 + 20 hours can be formed.

2. Compositions according to claim 1, characterised in that the corrosion-inhibiting agent is capable of modifying and increasing the corrosive attack time of a ferrous metallic article with an aqueous hydrochloric acid solution.

3. Compositions according to claim 1, characterised in that the acrylic polymer content is at least 15% by weight, based on the dry substance of the composition.

4. Compositions according to claim 3, characterised in that this content does not exceed 40%.

5. Compositions according to claim 4, characterised in that this content is between 20 and 30%.

6. Compositions according to one of claims 1 to 5, characterised in that the water solubility at 20°C of the compounds formed with the anticorrosion pigment and the iron II and III ions is at most equal to that of the iron (II or III) phosphates formed under the pH conditions for formation of the anticorrosion coating.

7. Compositions according to claim 6, characterised in that the anticorrosion pigment is selected from the group consisting of:
- phosphates having water solubility, under the temperature conditions to which the dry film may be subjected, at least equal to that of iron phosphates such as iron phosphates, alkaline-earth or aluminium phosphates;
- mixed phosphates such as mixed zinc and iron phosphates, possibly containing other mineral compounds such as a zinc oxide;
- silicates such as calcium or iron silicates or again mixed calcium and zinc silicates;
- phosphosilicates such as calcium, strontium and/or zinc phosphosilicates;
- zinc or calcium ferrites.

8. Compositions according to claim 1, 6 or 7, characterised in that the anticorrosion pigment contains one or more basic oxides which are very sparingly soluble in water.

9. Compositions according to claim 8, characterised in that the anticorrosion pigment is selected among zinc oxide-containing zinc and iron phosphates.

10. Compositions according to one of claims 1 or 6 to 8, characterised in that the anticorrosion pigment is selected among calcium, strontium and zinc phosphosilicates.

11. Compositions according to one of claims 1 or 6 to 8, characterised in that the anticorrosion pigment is a zinc ferrite.

12. Compositions according to one of claims 1 or 6 to 11, characterised in that the anticorrosion pigment content is smaller than or equal to 30% by weight of the dry substance of the composition.

13. Compositions according to claim 12, characterised in that this content is higher than or equal to 5%.

14. Compositions according to claim 1, characterised in that the corrosion-inhibiter content is between 0.1 and 1% by weight of the total ready-to-use composition.

15. Compositions according to claim 1, characterised in that the dispersing agent content is between 0.05 and 0.3% by weight of the dry substance of the composition.

16. Compositions according to claim 1, characterised in that the antifoaming agent content is between 0.05 and 0.5% by weight of the dry substance of the composition.

17. Compositions according to claim 1, characterised in that the coalescing agent content is between 1 and 5% by weight, based on the total ready-to-use composition.

18. Compositions according to any one of the preceding claims, characterised in that it also contains at least one waterproofing agent.

19. Compositions according to claim 18, characterised in that the waterproofing agent is selected from the group consisting of polyethylene waxes, polypropylene waxes, polyamide waxes, polysiloxanes, silanes and mixtures formed with the aforementioned waterproofing agents, preferably among polysiloxanes and silanes.

20. Compositions according to any one of the preceding claims, characterised in that it also contains at least one mineral filler.

21. Compositions according to claim 20, characterised in that the filler is a mica and/or a wollastonite and/or micaceous iron oxides.

22. Compositions according to any one of the preceding claims, characterised in that its pH is between 7 and 11, preferably between 8 and 9.5.

23. Compositions according to claim 18, characterised in that the content of waterproofing agent is between 0 and 20% by weight, based on the total ready-to-use composition.

24. Use of the compositions according to any one of the preceding claims for obtaining a coating of ferrous or nonferrous metallic elements, treated or untreated by phosphatation or chromation in technical fields such as the automotive industry, metallic furniture, barrel-making and the protection of metallic reinforcements for buildings.

25. Anticorrosion coating having a dry film thickness of at most about 50 microns produced using any one of the compositions defined in claims 1 to 23 and having salt spray resistance under the conditions of ISO standard 9227 of:
- for a dry film thickness of about 50 microns, 250 h (± 50 h) minimum on degreased metal sheets and 500 h (± 100 h) minimum on phosphated metal sheets;
- for a dry film thickness of about 30 microns, 120 h (± 25 h) minimum on degreased metal sheets and 250 h (± 50 h) on phosphated metal sheets.
